# EUROPEAN PATENT APPLICATION

(11) **EP 4 725 761 A1**
(43) Date of publication of application: **15.04.2026**
(21) Application number: 24205565.5
(22) Date of filing: 09.10.2024
(51) Int. Cl.: B60N 2/90

(54) **FLUID-FILLED CUSHIONING SYSTEM FOR SEAT UPHOLSTERY OF A VEHICLE WITH ELASTIC VOLUME**

(71) Applicant: Schukra Berndorf GmbH, 2560 Berndorf (AT)
(72) Inventor: MOHARAM, Yaser, 96465 Neustadt bei Coburg (DE); KALMUTZKI, Martin, 91174 Spalt (DE); SAMAIN, Maxime, 8530 Harelbeke (BE)
(74) Representative: Kraus & Lederer PartGmbB

(57) **Abstract**

A fluid-filled cushioning system for vehicle seat upholstery comprises a first volume containing a fluid, configured to be deformed by the fluid in response to an external force exerted onto the vehicle seat upholstery. The first volume further includes an elastic element configured to provide a restoring force opposing the deformation. The system may include a second volume in fluid communication with the first volume, allowing fluid transfer between volumes when force is applied. Various configurations of the elastic element, including internal and external arrangements, are provided. The system provides enhanced shock absorption and pressure distribution with improved durability.

## Description

The present disclosure relates to cushioning systems for vehicle seats. Various examples specifically relate to fluid-filled cushioning systems for seat upholstery of a vehicle including at least one elastic buffer volume.

### Prior art

Cushioning systems are widely employed in various applications, such as vehicle seats, office chairs, and mattresses, to ensure user comfort. Conventional cushioning systems often utilize foam materials or fluid-filled bladders, to provide support and absorb shock forces.

Foam-based cushioning systems rely on the bending of cell walls and compression of trapped air to provide spring and damping functions. Open-cell foams allow air displacement through small openings, contributing to damping, while closed-cell foams rely on the bending of cell walls for damping and the compression of trapped air for both spring and damping functions. The use of synthetic foam material, however, has a high environmental impact.

Fluid-filled cushioning systems, particularly using air as fluid, have gained popularity due to their adjustability and ability to distribute pressure evenly. In such systems, one or more interconnected bladders containing air can be subjected to external forces.

Traditional fluid-filled cushioning systems often face limitations in their ability to effectively absorb significant shock forces while maintaining optimal comfort for the user. Often the spring rate of air compression in closed systems can be inadequate, particularly when high shock forces are encountered.

### Summary

Accordingly, there is a need for improved cushioning techniques for vehicle seat upholstery, which alleviate or mitigate at least some of the above-identified restrictions and drawbacks.

This need is met by the features of the independent claims. The features of the dependent claims define further advantageous examples.

In the following, the solution according to the present disclosure will be described with regard to a fluid-filled cushioning system for a vehicle seat upholstery, wherein it is to be understood that the disclosed techniques may also be applied in other kinds of cushioning or shock absorbing application. For example, other applications where cushioning foam is used, such as for example seating, sports or orthopaedic padding, or in general protective gear may be improved by the described techniques.

A first aspect of the present disclosure relates to a fluid-filled cushioning system for a vehicle seat, in particular for vehicle seat upholstery.

The fluid-filled cushioning system comprises a first volume containing a fluid. The first volume is configured to be deformed by the fluid in response to an external force exerted onto the vehicle seat upholstery. The first volume may be deformed by the internal fluid pressure or fluid movement or forces transmitted internally by the fluid, which may be generated by the external force onto the first volume. The first volume further comprises an elastic element. The elastic element is configured to provide a restoring force to the fluid opposing the deformation. The elastic element may exert the restoring force onto the fluid, such that it opposes the internally transmitted forces or fluid movement in response to the external force. In such a way it may restore the previous condition of the first volume at least partly or fully, as before deformation due to the external force.

In various examples, the first volume may be configured as a closed system, operating independently to provide a cushioning effect without fluid connection to any other volume or fluid system. In this configuration, the external forces may be applied, i.e., subjected to the first volume, and particularly to the boundary wall of the first volume, whereby the first volume / the boundary wall is deformed, and the fluid is subjected to the external force. When the fluid within the first volume is deformed by the external forces, it transforms at least part of the external forces into internal forces or pressure to further deform the first volume and an elastic element, which then provides an elastic restoring force to the fluid. Therefore, the first volume provides a cushioning effect in response to applied external forces and further provides the elastic effect itself in response to applied forces.

The first volume may be understood as a contained space within the cushioning system that holds fluid. This volume may be defined by flexible, rigid, or elastic walls, or any combination thereof.

The first volume may be deformable in response to external forces. The fluid-filled cushioning system may be understood as a system that uses a fluid to provide cushioning or support in vehicle seat upholstery. The system may include one or more fluid-filled volumes, which may be interconnected or separate. The fluid contained within the first volume may be compressible or may not be compressible, for example, it may be a gas, such as air, or a liquid. The fluid may move within the first volume or between connected volumes in response to applied forces. By movement of the fluid, the first volume may be deformed. An external force may be understood as any force applied to the vehicle seat upholstery, such as the weight of a seat occupant or dynamic forces during vehicle operation. This force may be directly or indirectly transmitted to the first volume. An elastic element may be understood as a component that can deform under stress and return to its original shape when the stress is removed. This element may, for example, be a spring, an elastomeric material, or any other structure capable of storing and releasing energy through deformation, in an elastic manner. A restoring force may be understood as an (elastic) force exerted by the elastic element that opposes the deformation of the first volume and tends to return the system to its initial state when the external force is removed.

Thereby, the system according to the present disclosure may provide adaptive cushioning that responds to applied forces while maintaining a consistent level of support. The combination of fluid deformation and elastic restoration may result in enhanced shock absorption and pressure distribution. The elastic element may provide an adjustable the resistance curve. The system may also offer improved durability compared to traditional foam cushions, as the fluid and elastic element may be less susceptible to permanent deformation over time.

In general, a fluid-filled volume according to the described techniques may be referred to as a fluid-containing structure, for example an elastic or partly elastic, or inelastic bladder or compartment, which can be enclosed by various types of boundaries, such as flexible walls (e.g., in case of a bladder), and/or rigid walls (e.g., a piston/housing configuration), and/or elastic walls, or any combination thereof. In other words, a volume may be referred to generally as a fluid-filled space within a cushioning system, which may receive fluid from or provide fluid, for example to one or more other fluid-filled structures in the fluid-filled cushioning system, in reaction to an external force.

In various examples, the first volume may be in fluid connection with a second volume or multiple second volumes fluidly connected in a fluid cushioning system. This configuration may allow fluid to flow between volumes, in particular between the first and at least a second volumes, in response to applied forces. The system may further comprise a second volume in fluid communication with the first volume. The first volume may be configured to receive fluid from the second volume through a fluid connecting element when the external force is exerted onto the second volume. The elastic element may be configured to provide a restoring force to the fluid received by the first volume. The restoring force may oppose a transfer of fluid from the second volume to the first volume. The restoring force may cause the received fluid to return to the second volume when the external force is removed. The first volume may not be subjected to the external force, in particular, the fluid in the first volume may not be subjected to the external force transmitted via the boundary wall of the first volume, but via fluid transfer to the first volume.

Under a further aspect, a vehicle seat and/or a vehicle seat upholstery is provided comprising a fluid-filled cushioning system as described in the present disclosure.

Vehicle seats may support occupants or material in a vehicle, while seat upholstery may comprise the covering and padding/cushioning materials that provide the support. The fluid cushioning system may be integrated as a standalone solution or as a supplementary cushioning system within the upholstery structure. It may be typically situated between conventional foam padding and the seat frame. Fluid-filled volumes may be strategically positioned in high-load zones.

Under a further aspect, a vehicle comprises a vehicle seat and/or vehicle seat upholstery including a fluid-filled cushioning system as described in the present disclosure.

It is to be understood that the features mentioned above and features yet to be explained below can be used not only in the respective combinations indicated, but also in other combinations or in isolation, without departing from the scope of the present disclosure. In particular, the features mentioned above and those yet to be explained below may be used not only in the respective combinations indicated, but also in other combinations or in isolation without departing from the scope of the disclosure.

### Brief description of the drawings

These and other objects of the invention will be appreciated and understood by those skilled in the art from the detailed description of the preferred embodiments and the following drawings in which like reference numerals refer to like elements.
Figure 1 schematically illustrates a fluid-filled cushioning system with a single volume comprising an elastic element, according to various examples.
Figure 2 schematically illustrates a fluid-filled cushioning system with multiple fluidly coupled volumes, in which the techniques according to various examples can be applied.
Figure 3 schematically illustrates a first volume and a second volume that can be included in the fluid-filled cushioning system of Figure 2, wherein the first volume comprises an elastic element, according to various examples.
Figure 4 illustrates a conceptional diagram of the first volume comprising an elastic element and a damper element, according to various examples.
Figure 5A schematically illustrates the first volume, wherein the elastic element is an external spring, according to various examples.
Figure 5B schematically illustrates the inflated first volume of Figure 5A, according to various examples.
Figure 6A schematically illustrates the first volume, wherein the elastic element is an internal spring, according to various examples.
Figure 6B schematically illustrates the inflated first volume of Figure 6A, according to various examples.
Figure 7A schematically illustrates the first volume, wherein the elastic element is an internal elastic string, according to various examples.
Figure 7B schematically illustrates the inflated first volume of Figure 7A, according to various examples.
Figure 8A schematically illustrates the first volume, wherein the elastic element is formed by an elastic material of at least part of the first volume, according to various examples.
Figure 8B schematically illustrates the inflated first volume of Figure 8A, according to various examples.
Figure 9 schematically illustrates a housing with a piston in fluid communication with a second volume (not depicted), according to various examples.

### Detailed description of preferred embodiments

In the following, embodiments of the invention will be described in detail with reference to the accompanying drawings. It should be understood that the following description of embodiments is not to be taken in a limiting sense. The scope of the invention is not intended to be limited by the embodiments described hereinafter or by the drawings, which are taken to be illustrative examples of the general inventive concept. The features of the various embodiments may be combined with each other, unless specifically noted otherwise.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, elements, or other physical or functional units shown in the drawings or described herein may also be implemented by an indirect connection or coupling.

Hereinafter, techniques will be described with regard to open or closed fluid-filled cushioning systems, that may be used in combination with foam-based cushioning systems. In various examples, the fluid-filled system may comprise a pneumatic cushioning system.

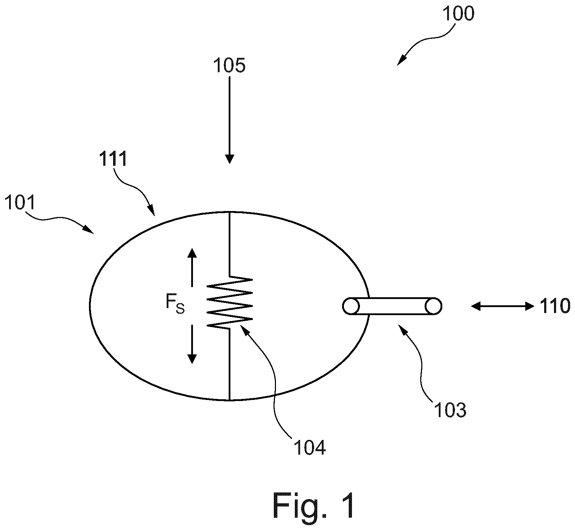

Figure 1 schematically illustrates a fluid-filled cushioning system 100 with a single first volume 101 comprising an elastic element 104, according to various examples.

As can be seen in Figure 1, the single fluid-filled volume 101 is an enclosed structure with a boundary wall 111. The first volume 101 contains a fluid 110, which is enclosed by the boundary wall 111.

Inside the first volume 101, an elastic element 104 is shown, represented by a spring symbol. This elastic element is configured to provide a restoring force F_{S} to oppose deformation of the volume at least partly caused by moving fluid in response to an external force applied.

An external force 105 is shown acting onto of the first volume 101. This external force represents the external pressure that might be applied to the cushioning system, such as the weight of a seat occupant, and/or additional shock/vibration forces in operation of the vehicle.

An optional fluid connecting element 103 is depicted as a small tube or channel on the right side of the first volume 101. This element allows for fluid flow in and out of the volume, potentially connecting it to other volumes in a fluid system (not shown). In other examples, the single firsts volume may be a closed system without fluid connecting element 103.

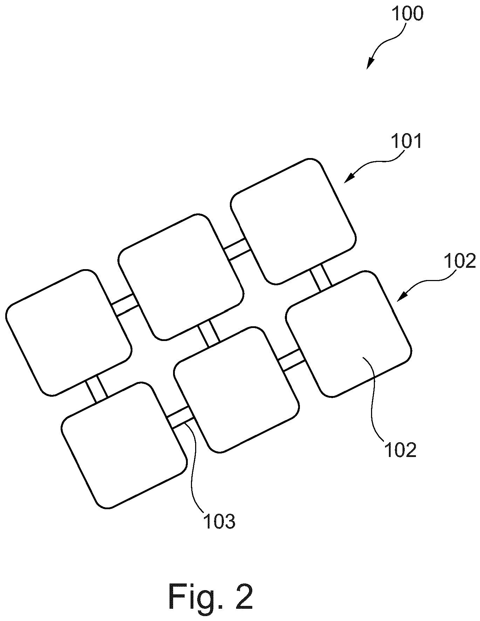

Figure 2 schematically illustrates a fluid-filled cushioning system 100 with multiple fluidly coupled volumes, in which the techniques according to various examples can be applied.

As can be seen in Figure 2, the multiple fluidly coupled volumes include a first volume 101 and at least a second volume 102 fluidly connected to each other.

The multiple fluidly coupled volumes form a network of interconnected fluid-filled volumes or bladders. These volumes are arranged in a grid-like pattern. The volumes are fluidly connected to each other by narrow passages or tubes 103. The tubes connecting the bladders 103 correspond to the fluid connecting elements. These tubes allow for fluid transfer between the various bladders in the system.

Figure 2 shows how multiple bladders can be interconnected to create a distributed cushioning system, allowing for pressure distribution and support across a larger area, such as for example a vehicle seat upholstery. By the interconnections of the volumes pressure applied to one area of the cushioning system 100 can be distributed across multiple bladders, wherein fluid is able to move between volumes in response to applied forces.

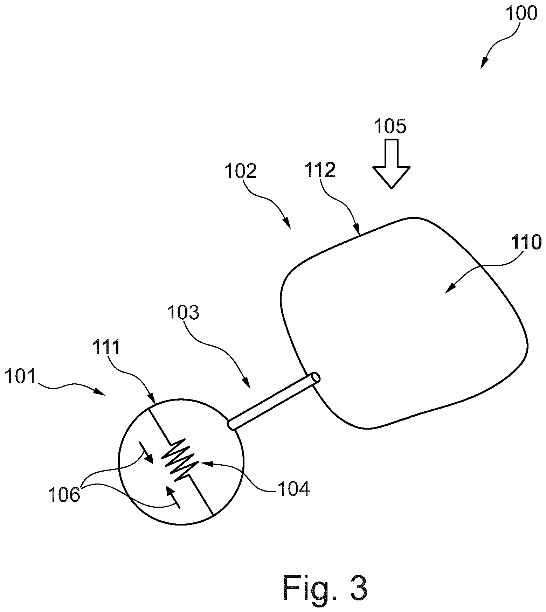

Figure 3 schematically illustrates a first volume 101 and a second volume 102 that can be included in the fluid-filled cushioning system 100 of Figure 2, wherein the first volume 101 comprises an elastic element 104, according to various examples.

As can be seen in Figure 3, the fluid-filled cushioning system 100 comprises the first volume 101 and the second volume 102 as fluidly coupled and connected by a fluid connecting element 103.

The first volume 101 is depicted as a smaller structure, which in some examples may not be subject to the external force applied to the cushioning system 100. The first volume 101 may be regarded an elastic volume and/or buffer volume and contains an elastic element 104, represented by a spring symbol. The boundary wall 112 the second volume 102 may be directly deformed by the external force 105, thereby causing the fluid to be directed or pushed into the first volume 101. The boundary wall 111 of the first volume 101 may undergo deformation caused by fluid received from the second volume 102 as effect of the external force 105 applied to the system 100. The elastic element is configured to provide a restoring force 106 to the fluid to oppose deformation of the first volume 101 in response to an external force applied.

The second volume 102 may be relatively larger than the first volume 101 and contains a fluid 110. For example, the volume of the second volume 102 may contain 2, 3, or even 5 times more fluid 110 than the first volume 101. In other examples, the volume relationship may be inverted.

The external force 105, for example an external shock force during operation of a vehicle, acts onto the outer surface of the boundary wall 112. This force represents the external pressure that might be applied to the cushioning system, such as the weight of a seat occupant or shock/vibration forces during vehicle operation.

The fluid connecting element 103, for example a tube connects the first volume 101 and the second volume 102. This element 103 allows for fluid flow between the volumes in response to the applied external force. In various examples, there could also be two or more second volumes 102 fluidly connected to each other and/or the first volume 101.

Summarizing, Figure 3 illustrates how the elastic first volume 101 can act as a buffer for the cushioning volume 102. When an external force is applied to the second volume 102, fluid can be transferred to the first volume, where the elastic element in the first volume 101 provides additional resistance and energy storage capacity. This configuration allows an enhanced shock absorption resistance curve and pressure distribution across the cushioning system.

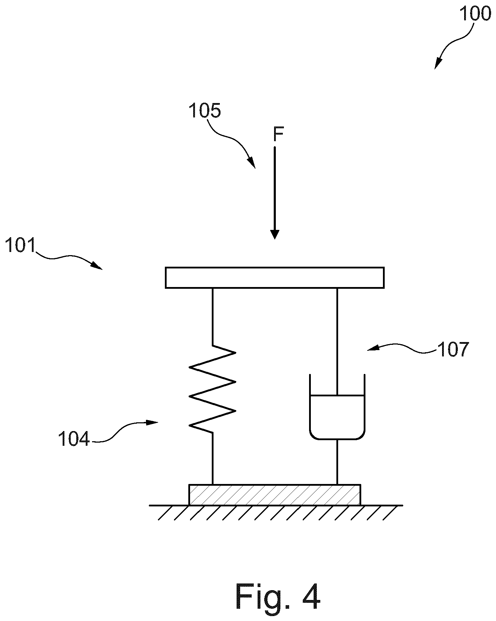

Figure 4 illustrates a conceptional diagram of the first volume 101 comprising an elastic element 104 and a damper element 107, according to various examples.

As can be seen in Figure 4, the fluid-filled cushioning system 100 is represented by a simplified shock absorber model including the components and functions within the first volume 101.

The elastic element 104 is depicted as a coil spring at the bottom of the diagram. This spring 104 represents the restoring force capability of the system, providing resistance to compression and the ability to return to its original position when the external force is removed.

Additionally to the spring, a damper element 107 is shown. The damper is represented by a piston-like structure, which conceptually illustrates its function to restrict fluid flow and dissipate energy. This damper element corresponds to the damper component described in the patent that restricts the flow rate of fluid into and out of the first volume.

The external force 105, labeled as F , acts onto the system. This force represents the external pressure or shock that might be applied to the cushioning system.

Figure 4 illustrates the function of the system to absorb and dissipate shock forces and provide an elastic restoring force to the deformation of fluid, i.e., how the combination of the elastic element (spring) and damper element works together to act as a shock absorber by providing both energy storage and dissipation. When an external force is applied, the spring compresses to store energy while the damper restricts the rate of compression, providing controlled resistance. This configuration allows for enhanced shock absorption and improved comfort in the fluid-filled cushioning system.

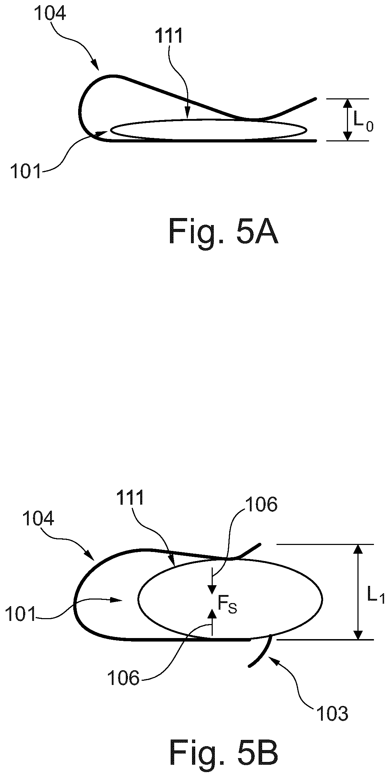

Figure 5A schematically illustrates the first volume 101, wherein the elastic element 104 is an external spring, according to various examples.

As can be seen in Figure 5A, the first volume 101 is depicted as a bladder in a deflated or compressed state. The boundary wall 111 of the first volume is shown enclosing only a relatively small volume.

The elastic element 104 is represented as an external mechanical spring attached to the outside of the boundary wall 111. In this deflated state, the spring is at its initial, relaxed length, labeled as L₀. In this example, the elastic element 104 is a clamp onto the outer surface of the boundary wall 111.

Figure 5B schematically illustrates the inflated first volume 101 of Figure 5A, according to various examples.

As can be seen in Figure 5B, the first volume 101 is now depicted in an inflated state. The boundary wall 111 has expanded and taken on a more rounded shape, indicating that the bladder encloses a relatively larger volume filled with fluid.

The elastic element 104, the external spring, is now stretched to a new length L₁. This extension of the spring represents the elastic deformation in response to the inflation of the first volume.

Inside the inflated bladder, arrows labeled as 106 indicate the internal restoring force Fₛ. This force opposes the expansion of the bladder and is provided by the stretched external spring 104.

At the bottom of the inflated bladder, a small opening or tube 103 represents the fluid connecting element that allows for fluid transfer between volumes.

Figs. 5A and 5B illustrate how the external spring elastic element interacts with the fluid-filled volume. When the bladder is inflated, the spring stretches, storing potential energy. This stored energy provides a restoring force that helps return the system to its original state when the inflation pressure is reduced.

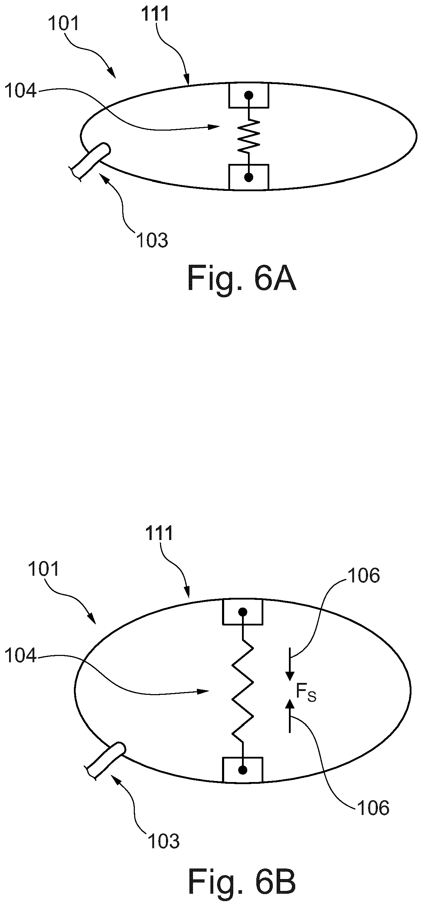

Figure 6A schematically illustrates the first volume 101, wherein the elastic element 104 is an internal spring, according to various examples.

As can be seen in Figure 6A, the first volume 101 is depicted as a bladder in a deflated or compressed state. The boundary wall 111 of the first volume is shown as enclosing the elastic element 104 in the first volume 101. The elastic element 104 is represented as an internal spring located inside the first volume 101. In this deflated state, the spring is at its initial, relaxed length. A optional fluid connecting element 103 is shown at the left side of the volume, indicating the point where fluid can enter or exit the first volume.

Figure 6B schematically illustrates the inflated first volume 101 of Figure 6A, according to various examples.

As can be seen in Figure 6B, the first volume 101 is now depicted in an inflated state. The boundary wall 111 has expanded and taken on a more rounded shape enclosing a relatively larger volume, indicating that the bladder is filled with fluid.

The elastic element 104, the internal spring, is now stretched or elongated within the inflated volume. This extension of the spring is caused by the deformation in response to the inflation of the first volume. Inside the inflated bladder, arrows labeled as 106 indicate the internal restoring force Fₛ. This force opposes the expansion of the bladder and is provided by the elongated internal spring. The fluid connecting element 103 may provide for fluid connection to other volumes.

Figures 6A and 6B illustrate how the internal spring elastic element interacts with the fluid-filled volume, particularly the boundary wall 111. When the bladder is inflated, the spring stretches, storing potential energy. This stored energy provides a restoring force that helps return the system to its original state when the inflation pressure is reduced. The internal spring configuration offers a different approach to providing the elastic restoring force as compared to the external spring shown in Figures 5A and 5B.

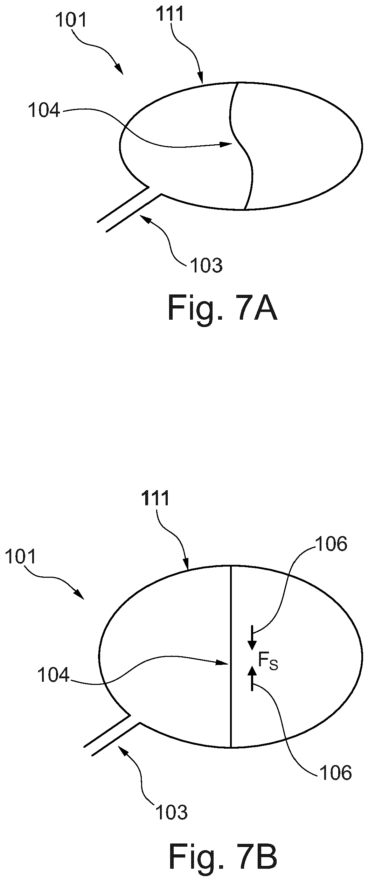

Figure 7A schematically illustrates the first volume 101, wherein the elastic element 104 is an internal elastic string, according to various examples.

Similarly as in the previous figures, the first volume 101 is depicted as a bladder-like structure in a deflated or relaxed state. The boundary wall 111 of the first volume is shown as a thin line enclosing the bladder. The elastic element 104 is represented as an internal elastic string or cord spanning the interior of the first volume 101. In this relaxed state, the elastic string is at its initial, unstretched length. A fluid connecting element 103 is shown at the left side of the volume, indicating the point where fluid can enter or exit the first volume.

Figure 7B schematically illustrates the inflated first volume 101 of Figure 7A, according to various examples.

As can be seen in Figure 7B, the first volume 101 is now depicted in an inflated state. The boundary wall 111 has expanded and taken on a more rounded shape, indicating that the bladder is filled with fluid.

The elastic element 104, the internal elastic string, is now stretched within the inflated volume. This stretching of the elastic string represents the elastic deformation in response to the inflation of the first volume.

Inside the inflated bladder, arrows labeled as 106 indicate the internal restoring force Fₛ. This force opposes the expansion of the bladder and is provided by the stretched internal elastic string, which is trying to return to its relaxed state. The fluid connecting element 103 is provided as in the previous figures.

Figures 7A and 7B illustrate how the internal elastic string element interacts with the fluid-filled volume. When the bladder is inflated, the elastic string stretches, storing potential energy. This stored energy provides a restoring force that provides a cushioning force to the fluid and helps return the system to its original state when the inflation pressure is reduced. The internal elastic string configuration offers another approach to providing the elastic restoring force, differing from both the external spring shown in Figures 5A and 5B and the internal spring shown in Figures 6A and 6B.

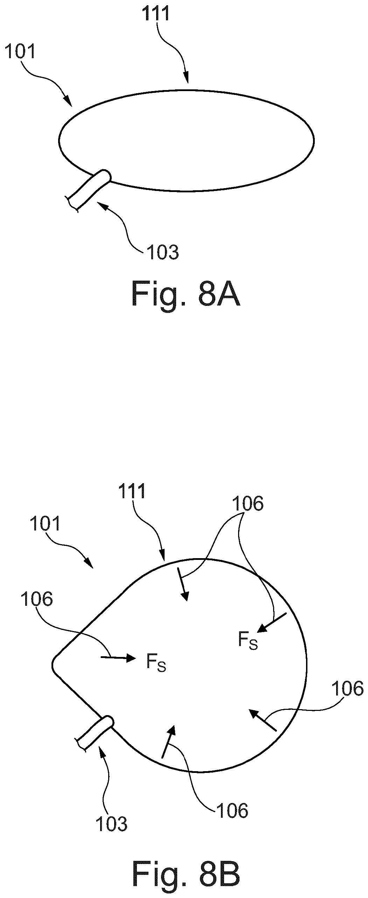

Figure 8A schematically illustrates the first volume 101, wherein the elastic element is formed by an elastic material of at least part of the first volume, according to various examples.

As can be seen in Figure 8A, the first volume 101 is depicted as a bladder-like structure in a relaxed or uninflated state. The boundary wall 111 of the first volume is shown enclosing a relatively small volume, wherein the boundary wall 111 itself is made of an elastic material. This elastic boundary wall 111 serves as the elastic element in this configuration. A fluid connecting element 103 is shown at the left side of the volume, indicating the point where fluid can enter or exit the first volume.

Figure 8B schematically illustrates the inflated first volume 101 of Figure 8A, according to various examples.

As can be seen in Figure 8B, the first volume 101 is now depicted in an inflated state. The boundary wall 111 has expanded and taken on a more rounded shape, indicating that the bladder is filled with fluid. The expansion of the elastic boundary wall represents the elastic deformation in response to the inflation of the first volume. Inside the inflated bladder, multiple arrows 106 indicate the internal restoring forces Fₛ. These forces oppose the expansion of the bladder and are provided by the stretched elastic material of the boundary wall, which is trying to return to its relaxed state. The fluid connecting element 103 is provided, which may be optional similarly as in previous figures.

Figures 8A and 8B illustrate how the elastic material of the boundary wall itself can serve as the elastic element in the fluid-filled cushioning system. When the bladder is inflated, the elastic wall stretches, storing potential energy throughout its surface. This stored energy provides restoring forces that help return the system to its original state when the inflation pressure is reduce.

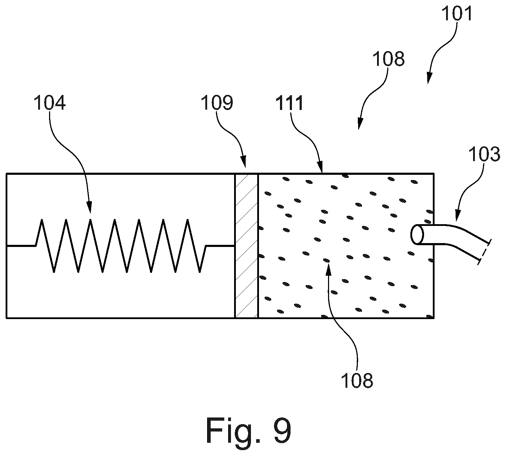

Figure 9 schematically illustrates a housing 108 with a piston 109 in fluid communication with a second volume 102 (not depicted), according to various examples.

As can be seen in Figure 9, the fluid-filled cushioning system 100 comprises a cylindrical housing 108 divided into two main sections. This housing forms part of the first volume 101.

The left section of the housing contains an elastic element 104, depicted as a coil spring. This spring provides the restoring force for the system. The right section of the housing contains a fluid 110, represented by small dots. This fluid-filled section is in communication with a second volume (not shown in this figure) through a fluid connecting element 103, depicted as a small opening on the right side of the housing. A piston 109 is shown as a hatched rectangular element separating the spring section from the fluid section. This piston is slidably mounted within the housing, allowing it to move in response to changes in fluid pressure or spring compression. The boundary wall 111 of the housing is represented by the outer lines of the cylindrical structure.

Figure 9 illustrates a different configuration of the fluid-filled cushioning system, where the elastic element (spring) and the fluid are separated by a movable piston within a rigid housing. When fluid enters the right section through the connecting element 103, it pushes the piston, compressing the spring. The compressed spring then provides a restoring force, pushing back on the piston and the fluid.

This design allows for a more controlled interaction between the elastic element and the fluid, wherein it combines the principles of fluid cushioning with mechanical spring action in a compact, enclosed system with rigid housing.

From the above said, the following general conclusions may be drawn:
In various examples, the fluid-filled cushioning system may include a second volume in fluid communication with the first volume. The first volume may be configured to receive fluid from the second volume through a fluid connecting element when an external force is exerted onto the outside surface of the second volume. This fluid transfer may cause deformation of the first volume. The elastic element in the first volume may provide a restoring force that opposes the transfer of fluid from the second volume to the first volume. For example, the elastic element may be mechanically coupled to the boundary wall of the first volume, such that when the boundary wall is deformed by the received fluid, the elastic element may provide the restoring force via the boundary wall to the fluid. In other examples, it may also be thinkable that the elastic element provides the restoring force directly to the fluid in the first volume, for example, if the elastic element is a compressible element at least partly surrounded by the fluid in the first volume.

When force is applied to the seat upholstery, fluid may move from the compressed second volume into the first volume. The elastic element in the first volume may provide resistance to this fluid transfer. When the external force is removed, the restoring force from the elastic element may push the fluid back into the second volume.

The second volume may be understood as an additional fluid-containing space within the cushioning system, separate from but fluidly connected to the first volume. This allows for fluid transfer between the volumes in response to applied external forces to the second volume. A fluid connecting element may be understood as a passage or channel that allows fluid to flow between the first and second volumes. This could be a tube, valve, or other type of conduit that permits controlled fluid movement. An effect of this multi-volume configuration may be enhanced pressure distribution and adaptive cushioning. The system may more effectively absorb and distribute forces across the seat surface by allowing fluid to move between volumes.

In various examples, the external force may be exerted onto the first volume (at least partly or only) indirectly via the fluid received from the second volume. As the external force is applied to the seat upholstery, it may compress the second volume, causing fluid to flow into the first volume through the fluid connecting element. This influx of fluid may then exert pressure on the walls of the first volume, effectively transmitting the external force indirectly. The elastic element in the first volume may then respond to this indirect force by providing a restoring force to the fluid.

Indirect force transmission may be understood as the transfer of force through an intermediary medium, in this case, the fluid moving between volumes. This contrasts with direct force application, where the external force would act immediately on the surface of the first volume, and/or the fluid contained in the first volume. An effect of this indirect force transmission may be improved pressure distribution. By allowing the force to be transmitted through fluid movement, the system may more effectively dissipate sudden impacts or changes in pressure.

In various examples, the external force may be (at least partially) exerted onto the outside of the first volume, thereby causing a direct deformation of at least a part of a boundary wall of the first volume. This direct deformation of the boundary wall may exert a force onto the fluid, which may further cause the deformation of the first volume by the fluid.

A boundary wall may be understood as the wall providing the outer and inner surface or enclosure of the first volume that contains the fluid. This wall may be flexible, allowing it to deform under applied forces. Direct deformation may be understood as the immediate change in shape or volume of the first volume's boundary wall in response to an external force, without the intermediary of fluid transfer from another volume. Direct deformation may have the effect of providing a force onto the fluid and further have the effect of further deformation of the first volume effected by the fluid transmitted force, as effected by the fluid received from the second volume.

This configuration may allow for a combination of direct and fluid-mediated force transmission within the cushioning system. The elastic element may respond to both the direct wall deformation and the fluid movement, providing a restoring force that opposes these deformations.

In various examples, the first and/or the second volume may comprise a fluid-filled , i.e., may be formed as a first respectively second, bladder. A bladder configuration may allow for a flexible and adaptable cushioning structure. The bladder may be able to conform to the shape of the seat occupant while containing the fluid within a defined space.

When the first volume is configured as a bladder, it may deform in response to fluid pressure changes, whether from direct external forces or fluid transfer from the second volume. The elastic element may be incorporated into or around the first bladder structure to provide the restoring force. When the second volume is also a bladder, it may allow for more uniform fluid displacement when compressed, facilitating smooth fluid transfer to the first volume. A fluid-filled bladder may be understood as a flexible, sealed container filled with a fluid, typically designed to change shape under pressure while maintaining its volume. In the context of a cushioning system, a bladder may be made of an inelastic, or elastic or semi-elastic materials.

An effect of using bladders for the fluid volumes may be improved conformability and pressure distribution in the cushioning system. Bladders may adapt more easily to different body shapes and sizes compared to other fluid containers. This may result in more even pressure distribution across the seating surface, potentially reducing pressure points and improving overall comfort. Additionally, the use of bladders may allow for a lighter and more compact cushioning system compared to some traditional designs.

In various examples, the elastic element may be arranged (at least partly, or completely) outside the first volume. The elastic element may be mechanically coupled to the first volume and configured to exert the restoring force as a compression force onto the first volume.

This external arrangement may allow the elastic element to encompass or surround the first volume, providing a constraining force that resists expansion of the volume as it fills with fluid. As the first volume deforms or expands due to incoming fluid or applied pressure, the elastic element may stretch or extend, storing potential energy. This stored energy may then be released as a compressive force acting on the outer surface of the first volume, helping to return it to its original shape and size when the external force is removed.

An elastic element arranged outside the first volume may be understood as a component that surrounds or is attached to the exterior of the fluid-containing structure. This could be a spring, elastomeric material, or other resilient structure that can deform and recover. Mechanical coupling may be understood as a physical connection or attachment between the elastic element and the first volume that allows forces to be transmitted between them. A compression force may be understood as a force that acts to reduce the size or volume of an object by pushing inward from the outside.

An effect of this external elastic element configuration may be enhanced control over the deformation and recovery of the first volume. By applying a compressive force from the outside, the elastic element may provide more uniform resistance to expansion across the entire surface of the first volume. This may result in more predictable and consistent cushioning behavior, potentially improving both comfort and durability of the system. Additionally, having the elastic element outside the fluid volume may simplify maintenance and allow for easier adjustment or replacement of the elastic component if needed.

In various examples, the elastic element may be arranged (at least partially, or completely) inside the first volume. The elastic element may be mechanically coupled between inner surface areas of the first volume and configured to exert the restoring force as a tension force to the first volume.

This internal arrangement may allow the elastic element to operate within the fluid-filled space of the first volume. As the first volume expands due to incoming fluid or applied pressure, the elastic element may stretch or extend between the inner surfaces, creating tension within the volume. This tension may act to resist further expansion and provide a restoring force that helps return the first volume to its original shape when the external force is removed.

An elastic element arranged inside the first volume may be understood as a component that is contained within the fluid-filled structure. This could be an internal spring, elastic cord, or other resilient structure that can stretch and contract within the fluid environment. Inner surface areas may be understood as the interior walls or boundaries of the first volume, to which the elastic element may be attached or anchored. A tension force may be understood as a force that acts to stretch or elongate an object by pulling outward from within.

An effect of this internal elastic element configuration may be more direct interaction between the elastic component and the fluid. The internal arrangement may also provide protection for the elastic element from external wear and tear, potentially increasing its longevity. Additionally, this configuration may allow for a more compact overall design of the cushioning system, as the elastic element does not require external space. However, it may also introduce challenges in terms of sealing the volume and maintaining the integrity of the fluid environment.

In various examples, the elastic element may comprise one or more of: a coil spring, a leaf spring, an elongated component or sheet component made of an elastomeric material, a compressible foam element, or a combination of these.

These types of elastic elements may allow for customization of the cushioning system's performance characteristics. A coil spring may provide a linear or progressive spring rate depending on its design. A leaf spring may offer a compact solution with the potential for a variable spring rate. An elongated or sheet component made of elastomeric material may provide both elastic properties and damping characteristics. A compressible foam element may offer a combination of cushioning and spring-like behavior. Combinations of these elements may be used to achieve specific force-displacement curves or to optimize the system for particular applications.

A coil spring may be understood as a spiral of elastic material, typically metal, that can be compressed or extended to store mechanical energy. A leaf spring may be understood as an arc-shaped length of spring steel or other elastic material that flexes under load. An elastomeric material may be understood as a polymer with viscoelastic properties, capable of significant elastic deformation under stress. A compressible foam element may be understood as a low-density, cellular structure that can be deformed under pressure and return to its original shape when the pressure is removed.

An effect of using these elastic elements or combinations thereof may be the ability to fine-tune the cushioning system's response to different types and magnitudes of loads. For example, a combination of a coil spring and elastomeric material might provide both quick initial response and longer-term comfort. By selecting appropriate elastic elements, the cushioning system may be optimized for specific use cases, such as long-duration seating comfort, impact absorption for off-road vehicles, or weight-sensitive applications in performance vehicles.

In various examples, the first volume may comprise a housing with a piston, wherein the piston may be slidably mounted within the housing. The piston may be moved by the fluid in response to the external force or directly by the external force, and the elastic element may be arranged within the housing to provide the restoring force to the fluid and/or the piston.

This piston-housing configuration may allow for a more controlled and guided movement of the fluid within the first volume. As the external force is applied, fluid pressure may increase, causing the piston to slide within the housing. The elastic element, arranged within the housing, may then compress or extend, depending on its configuration, to provide a restoring force against the piston's movement. This arrangement may create a more linear and predictable response to applied forces, potentially improving the consistency of the cushioning effect.

A housing may be understood as a rigid or semi-rigid container that encloses and guides the movement of other components within the cushioning system. A piston may be understood as a disk or cylinder fitting closely within a tube or housing, which moves up and down to alter the volume of the chamber it is in, or to exert force on a fluid within the chamber. Slidably mounted may be understood as an arrangement where one component (in this case, the piston) can move in a controlled linear motion within another component (the housing) while keeping a sealed connection.

An effect of this piston-housing configuration may be improved precision and control over the cushioning system's response to applied forces. The guided movement of the piston may result in more consistent performance across different load conditions. This arrangement may also allow for easier fine-tuning of the system's characteristics by adjusting the properties of the elastic element or the dimensions of the piston and housing. Additionally, this configuration may provide better protection for the internal components of the system, potentially increasing durability and lifespan.

In various examples, at least part of the first volume may be at least partly surrounded by a rigid encasing. The elastic element may comprise an elastic foam material arranged within the rigid encasing and configured to be compressed and/or sheared against the rigid casing when the first volume is deformed.

This configuration may combine the benefits of a fluid-filled system with those of a foam-based cushioning system. The rigid encasing with the foam may provide structure and support, while also constraining the deformation of the first volume. As the first volume deforms due to applied forces and fluid transfer, the elastic foam material within the encasing may compress or experience shear forces against the rigid wall. This interaction between the foam, fluid, and rigid encasing may create a complex and potentially highly effective cushioning response.

A rigid encasing may be understood as a non-flexible outer shell or container that (at least partly) surrounds the first volume. An elastic foam material may be understood as a cellular structure made from elastomeric polymers, capable of recovering its original shape after compression or deformation, thereby providing an elastic force. Deformation of the first volume compresses or shears at least part of the foam against the inner surface of the rigid encasing. Shear forces may be understood as forces acting essentially parallel to an inner surface of the encasing, as opposed to compressive forces which act essentially perpendicular to an inner surface of the encasing.

The rigid encasing may help protect the first volume and provide a surface against which the foam can be compressed or sheared. The rigid casing may be elastic or may not be elastic, i.e., may or may not be compressed by the external force directly.

In various examples, the fluid-filled cushioning system may further comprise a damper element configured to restrict a flow rate of the fluid into the first volume and/or out of the first volume. This damper element may work in conjunction with the elastic element to control the dynamic response of the cushioning system.

The damper element may be positioned in the fluid path between volumes or within a volume itself. It may be positioned and fluidly connected between the first and the second volume. It may act to slow down the movement of fluid, providing resistance to rapid changes in pressure or volume. When an external force is applied, the damper may limit how quickly fluid can enter or exit the first volume, potentially reducing the impact of sudden forces. Similarly, when the force is removed, the damper may control the rate at which the system returns to its original state.

A damper element may be understood as a device or mechanism that slows down or restricts the motion of a system, typically by creating resistance to fluid flow. In this context, it specifically refers to a component that controls the rate of fluid movement within the cushioning system. Flow rate may be understood as the volume of fluid that passes through a given point in the system per unit of time. Restricting the flow rate means limiting how quickly fluid can move through the system.

An effect of incorporating a damper element may be improved comfort and stability in dynamic situations. By controlling the rate of fluid movement, the damper can help absorb and dissipate energy from impacts or vibrations, potentially reducing fatigue for the seat occupant during long journeys or in vehicles that experience frequent motion. The damper may also help prevent bottoming out (sudden, complete compression) of the cushioning system under high loads by slowing the evacuation of fluid from compressed areas. Additionally, the combination of the elastic element and damper may allow for fine-tuning of the cushioning system's response characteristic.

In various examples, the elastic element may comprise an elastic material of at least a part of the first volume. This configuration integrates the elastic properties directly into the structure of the first volume, rather than relying on a separate component for elasticity.

The walls or boundaries of the first volume may be made from or incorporate an elastic material, such as an elastomer or a specially designed polymer. When the first volume is subjected to deformation due to fluid movement or external forces, this elastic material may stretch or compress. As it deforms, it may store potential energy, which provides the restoring force to help the volume return to its original shape when the deforming force is removed. This integrated approach may allow for a more compact and potentially simpler design of the cushioning system. An elastic material may be understood as a substance that can deform under stress and return to its original shape when the stress is removed. In this context, it refers to a material that can provide both containment for the fluid and the necessary restoring force for the cushioning system.

In various examples, the elastic element may provide one of a single spring rate, a dual spring rate, or a progressive spring rate. This variety of spring rate options allows for customization of the cushioning system's response to different levels of applied force.

A spring rate may be understood as the amount of force required to compress or extend a spring by a unit of distance. In the context of this cushioning system, it refers to the relationship between the applied force and the resulting deformation of the elastic element.

A single spring rate may be understood as a constant, linear relationship between force and deformation. A single spring rate configuration may provide a consistent, linear response throughout the range of deformation. This may be suitable for applications where a predictable, uniform cushioning effect is desired.

A dual spring rate may be understood as a system that exhibits two distinct spring rates at different points in its range of motion. A dual spring rate configuration may offer different levels of resistance at different points in the deformation process. For example, it may provide a softer initial response for comfort during normal use, followed by a firmer response to handle higher loads or impacts.

A progressive spring rate may be understood as a non-linear relationship where the spring rate increases as deformation increases. A progressive spring rate may offer a continuously variable response, with the resistance increasing as the deformation increases. This may allow the cushioning system to provide comfort under light loads while still being capable of handling heavier loads without bottoming out.

The first volume may be subjected to the external force exerted onto the vehicle seat upholstery. At least a first region of the boundary wall of the first volume may be subjected to the external force. The fluid in the first volume may thereby be subjected to the external force.

The first volume may be subjected directly to the external force. The external force may be transmitted or exerted directly or indirectly via further cushioning elements onto the boundary wall of the first volume, and thereby onto the fluid. At least part of the first volume or first volume boundary wall may be deformed directly by the external force.

At least part of the first volume and/or first volume boundary wall may be deformed by the fluid under the influence of the external force onto the first volume and/or first volume boundary wall.

At least part of the first volume may be configured to be deformed by the fluid, when the first and/or the fluid is subjected to the external force exerted onto the vehicle seat upholstery.

In the context of the fluid-filled cushioning system, the phrase "subjected to a force" may have the meaning that the force is exerted, directly or indirectly, onto the respective element. At least part of the first volume may be configured to be deformed by the fluid under the influence of the external force exerted onto the vehicle seat upholstery.

In the context of the fluid-filled cushioning system, the phrase "under the influence of an external force" may comprise that the external force acts on or influences a component or the fluid, including that a force or pressure is exerted either directly or indirectly, through the fluid or other components of the system.

The first volume may be configured to be deformed by the fluid, in response to, or caused by, the external acting on the fluid. The deformation may be caused by a pressure and/or movement of the fluid within the first volume.

The restoring force may cause the received fluid to return to the second volume when the external force is removed.

The elastic element may resist a deformation of the first volume caused by the received fluid from the second volume, and thereby may exert the restoring force onto the fluid.

An outer surface of the first volume may not be (directly) subjected to the external force. The first volume may only be subjected indirectly to the force, via the fluid, or transferred by the fluid.

The first and/or second volumes may comprise and may be bound by boundary walls of a respective one of the first and/or second volumes.

The elastic element may be arranged outside the first volume and/or at least partly around the first volume, and may apply a compression force on an outer surface of the first volume and/or to a boundary wall of the first volume.

The elastic element may comprise a spring, or spring element. The elastic element may be mechanically coupled on the outside of the first volume to at least one boundary wall of the first volume.

The elastic element may provide restoring force directly to the fluid, or to at least one boundary wall of the first volume. The restoring force, therefore, may be directly exerted onto the boundary wall, or indirectly via the fluid.

The restoring force may be compression force to the boundary wall from outside onto the first volume.

A first end of the elastic element may be connected to and/or move with a boundary wall of the first volume as it is inflated by the received and/or deforming fluid. A second end of the elastic element may be fixed outside the first volume.

The damper element may comprise a flow-braking element connected between the second volume and the first volume. The flow-braking element may be configured to restrict the fluid flow rate from the second volume to the first volume, and vice versa.

The first volume may be configured to receive fluid from the second volume when a pressure in the second volume exceeds a predetermined threshold corresponding to a spring force of the elastic element of the first volume.

The first volume may be configured to return fluid to the second volume when a shock force applied to the second volume is removed, the shock force being referred to as the external force.

The first volume may be configured to maintain a pressure in the second volume above a predetermined threshold.

The elastic element may comprise a combination of at least two elastic elements selected from the group consisting of a coil spring, a leaf spring, and an elastomeric material.

The elastic element may be attached to a first portion of boundary wall and an opposing second portion of the boundary wall of the first volume, such that the elastic element is extended as the first volume is deformed.

The second volume and the first volume may be configured to provide a combined spring curve that is adjustable by changing a spring rate of the elastic element of the first volume.

A fluid-filled cushioning system for a vehicle seat may also be referred to as fluid-filled cushioning system for a seat upholstery of a vehicle seat. The fluid-filled cushioning system may be included in seat upholstery or seat cushion of a vehicle seat.

The first volume may be configured to be deformed by the fluid received from the second volume through a fluid connecting element under the influence of the external force on the second volume.

The spring element may be mechanically coupled to the first volume from an outside of the first volume, and configured to exert the restoring force as a compression force onto the first volume.

The elastic element may be realized by any suitable mechanical part. The elastic element may comprise a torsion spring, configured to be deformed by rotation when the first volume is subjected to the external force, or, for example a wave spring, or Belleville washer.

The elastic element may comprise an elastomeric bushing, configured to deform elastically when the first volume is subjected to the external force, providing both spring force and damping.

The elastic element may comprise a compressible foam material, configured to be deformed by compressive forces when the first volume is subjected to the external force, providing both spring force and damping.

The elastic element may comprise an elastomeric sheet, configured to be deformed by shear forces when the first volume is subjected to the external force, providing a spring force through the shear deformation of the material.

The elastic element may comprise an elastomeric compression spring, configured to be deformed by compressive forces when the first volume is subjected to the external force, providing a spring force through the compression of the elastomeric material.

The elastic element may comprise an elastomeric torsion spring, configured to be deformed by twisting forces when the first volume is subjected to the external force, providing a spring force through the torsional deformation of the elastomeric material.

The elastic element may comprise an elastomeric honeycomb structure, configured to be deformed by compressive forces when the first volume is subjected to the external force, providing a spring force through the buckling of the honeycomb walls.

The elastic element may comprise an elastomeric lattice structure, configured to be deformed by a combination of tensile, compressive, and shear forces when the first volume is subjected to the external force, providing a spring force through the complex deformation of the lattice elements.

It would also be possible that the elastic element comprises partly elastic and partly inelastic properties. The elastic element may therefore be replaced by an at least partly elastic element. A material that is at least partly elastic, meaning it can exhibit both elastic and inelastic behavior.

The elastic element may comprise a combination of a viscoelastic material and an elastic element.

The elastic element may comprise a series of interconnected elastic elements, configured to be deformed by a combination of bending, tensile, compressive, and shear forces when the first volume is subjected to the external force, providing a spring force through the combined deformation of an elastomeric network.

The elastic element may be arranged at least partly inside the first volume. The elastic element may be arranged at least partly outside the first volume. The elastic element may be arranged partly inside and partly outside the first volume. The elastic element may be in direct contact with the fluid inside the first volume. The elastic element may be in contact with the external surface of the first volume. The elastic element may be partially embedded in the walls of the first volume. The elastic element may bridge the interior and exterior regions of the first volume. The elastic element may be arranged in a combination of internal and external configurations relative to the first volume.

The elastic element may be provided as a compressible material, specifically foam, element (at least partly) inside the first volume and/or the second volume.

Each of the first and second volumes, or even a third and/or fourth further fluid-filled volume, may comprise an elastic element as described for the first volume.

A deformation of the first volume, in this regard may refer to a modification of the shape of the first volume, in particular the boundary walls of the first volume, effected by the fluid movement or pressure. It is to be understood that the described cushioning techniques are based on fluid pressure or movement, less on cushioning effects transmitted or provided by direct deformation of elastic elements by external forces.

### Reference numerals

- 100: fluid-filled cushioning system
- 101: first fluid-filled volume
- 102: second fluid-filled volume
- 103: fluid connecting element
- 104: elastic element
- 105: external force
- 106: internal restoring force
- 107: damper element
- 108: rigid housing
- 109: piston
- 110: fluid
- 111: boundary wall of first volume
- 112: boundary wall of second volume

## Claims

1. A fluid-filled cushioning system (100) for upholstery of a vehicle seat, comprising:
- a first volume (101) containing a fluid (110), wherein the first volume (101) is configured to be deformed by the fluid (110) in response to an external force (105) exerted onto the vehicle seat upholstery;
wherein the first volume (101) further comprises an elastic element (104) configured to provide a restoring force (106) to the fluid (110) opposing the deformation.

2. The fluid-filled cushioning system (100) of claim 1, further comprising:
- a second volume (102) in fluid communication with the first volume (101), wherein the first volume (101) is configured to receive fluid (110) from the second volume (102) through a fluid connecting element (103) in response of the external force (105) being at least partly exerted onto the outside surface of the second volume (102);
wherein the receiving of fluid (110) from the second volume (102) causes the deformation of the first volume (101); and
wherein the restoring force (106) is further configured to oppose transfer of the fluid (110) from the second volume (102) to the first volume (101).

3. The fluid-filled cushioning system (100) of claim 2, wherein the external force (105) is exerted onto the first volume (101) indirectly via the fluid (110) received from the second bladder (102).

4. The fluid-filled cushioning system (100) of one of the preceding claims, wherein the external force (105) is at least partially exerted onto the outside of the first volume (101), thereby causing a direct deformation of at least a part of a boundary wall (111) of the first volume (101), wherein by the direct deformation of the at least part of the boundary wall (111) a force is exerted onto the fluid (110), which further causes the deformation of the first volume (101) by the fluid (110).

5. The fluid-filled cushioning system (100) according to one of the preceding claims, wherein the first and/or the second volume comprises a fluid-filled bladder.

6. The fluid-filled system of one of the preceding claims, wherein the elastic element (104) is arranged outside the first volume (101),
wherein the elastic element (104) is mechanically coupled to the first volume (101) and configured to exert the restoring force (106) as a compression force onto the first volume (101).

7. The fluid-filled cushioning system (100) of one claims 1 to 5, wherein the elastic element (104) is arranged inside the first volume (101),
wherein the elastic element (104) is mechanically coupled between inner surface areas of first volume (101) and configured to exert the restoring force (106) as a tension force to the first volume (101).

8. The fluid-filled cushioning system (100) of one of the preceding claims, wherein the elastic element (104) comprises one or more of:
- a coil spring;
- a leaf spring;
- an elongated component or sheet component made of an elastomeric material;
- a compressible foam element;
- or a combination of the above.

9. The fluid-filled cushioning system (100) of one of the preceding claims, wherein the first volume (101) comprises a housing (108) with a piston (109), wherein the piston (109) is slidably mounted within the housing (108), such that the piston (109) is moved by the fluid (110) in response to the external force (105), and wherein the elastic element (104) is arranged within the housing (108) to provide the restoring force (106) to the piston (109).

10. The fluid-filled cushioning system (100) of one of the preceding claims, wherein at least part of the first volume (101) is at least partly surrounded by a rigid encasing, wherein the elastic element (104) comprises an elastic foam material arranged within the rigid encasing and configured to be compressed and/or sheared against the rigid casing when the first volume (101) is deformed.

11. The fluid-filled cushioning system (100) of one of the preceding claims, wherein the fluid-filled cushioning system (100) is a pneumatic cushioning system.

12. The fluid-filled cushioning system (100) of one of the preceding claims, further comprising a damper element (107) configured to restrict a flow rate of the fluid (110) into the first volume (101) and/or out of the first volume (101).

13. The fluid-filled cushioning system (100) of one of the preceding claims, wherein the elastic element (104) comprises an elastic material of at least a part of the first volume (101).

14. The fluid-filled cushioning system (100) of one of the preceding claims, wherein the elastic element (104) provides one of a single spring rate, a dual spring rate, or a progressive spring rate.

15. A vehicle seat upholstery comprising the fluid-filled cushioning system (100) of one of the preceding claims.
